# EUROPEAN PATENT SPECIFICATION

(11) **EP 1 532 866 B1**
(45) Date of publication and mention of the grant of the patent: **16.04.2008**
(21) Application number: 03425743.6
(22) Date of filing: 19.11.2003
(51) Int. Cl.: A23L 1/16, A23L 1/164, A23L 3/36, A23P 1/10

(54) **A method for producing frozen ready-to-eat meals based on pasta or cereal grains**
Verfahren zur Herstellung eines gefrorenen Fertiggerichts auf Basis von Teigwaren oder Getreidekörnern
Procédé de fabrication de plats surgelés prêts a consommer à base de pâtes alimentaires ou grains de céréales

(43) Date of publication of application: 25.05.2005
(73) Proprietor: Barilla G. e R. Fratelli S.p.A., 43100 Parma (IT)
(72) Inventor: Caselli, Oreste, 42021 Bibbiano (Reggio Emilia) (IT); Veronesi, Sergio, 43030 Basilicanova (Parma) (IT)
(74) Representative: Ferreccio, Rinaldo

(56) References cited:
- WO-A-03/103414
- CH-A- 670 936
- GB-A- 2 280 352
- US-B1- 6 235 330
- DATABASE WPI Section Ch, Week 199602 Derwent Publications Ltd., London, GB; Class D11, AN 1996-018294 XP002279077 & KR 9 402 525 B (TAE WON FOOD CO LTD), 25 March 1994 (1994-03-25)
- PATENT ABSTRACTS OF JAPAN vol. 2000, no. 23, 10 February 2001 (2001-02-10) & JP 2001 161277 A (NIHON SHOKKEN CO LTD;INAHO SEIKA KK), 19 June 2001 (2001-06-19)

## Description

### Field of Application

The present invention concerns, in general, a method for the production of products of the frozen foodstuff sector.

The invention concerns, in particular a method for the production of frozen foodstuff products based on pasta or cereals in grain form, particularly rice, ready for consumption after heating.

### State of the Known Art

The so-called frozen "ready-to-eat dishes" are meeting increasing success with consumers because of the little time the present-day lifestyle leaves available for the preparation of meals.

The ready-to-eat dishes of greater success are first courses, like various types of pasta, accompanied by sophisticated or simple sauces, and the rice dish known as risotto.

The current technology adopted for the production of the said ready-to-eat dishes requires the separate preparation of the fundamental ingredients of the dish, their freezing and the mixing of such frozen ingredients in the appropriate portions.

Thus, to give an example, if the desired dish is pasta with a seafood sauce, the production phases will be the following:
- Cooking the pasta in water, draining the pasta, rinsing with water and freezing;
- Preparing and cooking the sauce and reducing the said sauce to frozen pellets;
- Cooking and freezing the seafood;
- Mixing the said three ingredients in the appropriate proportions and packaging the thus obtained mixture.

The same above mentioned process is carried out to prepare a seafood risotto. Also in this case the rice is therefore cooked separately in water, rinsed and frozen.

A severe inconvenience of the ready-to-eat pasta or rice dishes actually on the market is the difficulty in taking portions of them.

In fact the said ready-to-eat dishes are mostly marketed in bags or packets containing about 500 g (equivalent to 2-3 portions) of a mixture that consists of pasta or loose rice grains (obtained by the freezing, in a fluidized bed, of pasta or rice boiled in water and rinsed), pellets of sauce, and various particle bits (mushrooms, shellfish, vegetables etc.).

If the whole packet is used a final dish with the correct weight ratios is obtained but if, for example, only a single portion is required it is difficult to withdraw a quota of the mixture that will contain the three ingredients in the right proportions, and the final dish will have too little or too much of the dressing.

US-B1-6235330 discloses a process in which discrete pieces of a free-flowing frozen food are coated with a liquid coating material. KR9402525B relates to a process for preparing an instant sauced frozen noodle in which the sauce and the noodle are frozen separately.

The problem at the base of the present invention is therefore that of making available a ready-to-eat dish of pasta or cereals in grains that allows easy portioning, overcoming the above highlighted inconveniences related to the known technique.

### Summary of the invention

Such a problem has been solved, according to the invention, by a method for the production of a frozen ready-to-eat dish based on pasta or cereals in grains, comprising the steps of:
a) preparing a fluid dressing and cooking possible food particle ingredients;
b) cooling the dressing to a temperature that can vary between +4°C and -8°C;
c) uniformly mixing said fluid dressing and, optionally, said particle ingredients with precooked, and possibly frozen, pasta or cereal grains.
d) feeding the thus obtained and cooled mixture into a measuring equipment that provides for the formation of sphere-like portions of predetermined weight or volume;
e) subjecting said portions to ultra-fast freezing;
f) packaging a pre-determined number of said frozen portions into appropriate containers or bags.

The fluid dressing in phase b) cited above is preferably cooled to a temperature of between -1°C and -4°C.

The mixture from phase c) is preferably rapidly cooled to around +4°C - - 8°C.

Among the particle ingredients we cite, as an example, vegetables (asparagus, spinach, artichokes, pumpkin, zucchini, etc.), shellfish, crustaceans, fish, meat, mushrooms etc..

The said fluid dressing can consist of, to give an example, a sauce, like, for example, a tomato sauce, a ragout of meat or fish, a cream or béchamel sauce, and regional sauces like "pesto", "amatriciana" etc., or else a vegetable soup or vegetable cream dressed with oil and the like.

The measuring equipment for portioning the mixture can consist of, for example, a screw dosing device.

Among the grain cereals that can be used in the method according to the invention there can be cited, in addition to rice, the grain of wheat, barley and spelt ("farro").

The expression "precooked pasta and cereal grains" is understood to also include pasta and cereal grains cooked separately from the other ingredients, by boiling in salted water, even substantially simultaneously with the preparation of the fluid dressing, and with the cooking of any particle ingredients.

The sphere-like or drop-shaped portions obtained by the method according to the invention effectively solves the problem, highlighted above with reference to the prior art, of portioning the ready-to-eat dishes, as each of the said portions contains the correct proportions of all the ingredients of the ready-to-eat dish.

The method according to the present invention will be further described making reference to examples supplied here as illustrative and not limiting.

### EXAMPLE 1

### RISOTTO WITH ASPARAGUS

| | |
|---|---|
| Rice | 1500 g |
| Asparagus tips | 1000g |
| Cream | 400 g |
| White wine | 300 g |
| Cheese | 300 g |
| Extra virgin olive oil | 200 g |
| Sunflower seed oil | 200 g |
| Onion | 200 g |
| Carrot | 200 g |
| Salt | 155 g |
| Vegetable broth | 100 g |
| Black pepper | 20 g |
| Spinach | 20 g |
| Water | 4000 g |

First of all an asparagus sauce is prepared, sauteing the onion and carrot in the olive and sunflower oils and then adding the water and vegetable broth, followed by 2/3 of the asparagus tips and the other ingredients except for the cheese. This is all brought to boiling point and cooked for about 30 minutes. At the end of the cooking, the mixture is cooled and the grated cheese and remaining asparagus tips are added.

At this point the asparagus sauce, cooled to -1°C, is mixed uniformly with the precooked rice, in a 2:3 weight unit ratio.

The thus obtained mixture, brought to a temperature of about 0°C, is pumped by such means as not to damage the pieces, like for instance a lobe pump, into the nozzles of a dosing device for forming drop-shaped portions with a diameter of about 30-40 mm, a thickness of 6-8 mm and a weight of 10 g.

The 'drops' are immediately frozen to -20°C and packaged in suitable food containers, such as e.g. bags or trays or carton boxes.

### EXAMPLE 2

### ITALIAN MINESTRONE WITH PASTA

| | |
|---|---|
| Potatoes | 500g |
| Tomato concentrate | 300g |
| Extra-virgin olive oil | 200g |
| Onion | 200g |
| Carrot | 200g |
| Salt | 155g |
| Zucchini | 150g |
| Pumpkin | 150g |
| Green beans | 150g |
| Celery | 150g |
| Vegetable broth | 100g |
| Cabbage | 50g |
| Basil | 25g |
| Water | 10000g |

First of all the dressing is prepared, composed in this case of a vegetable soup dressed with extra-virgin olive oil, sautéing the onions, carrots and celery in the extra-virgin olive oil. The water and vegetable broth are added, then the remaining vegetables, and the mixture is brought to boiling, cooking it for about 40 minutes.

The dressing is cooled and added to it are the following previously precooked and frozen vegetables:

| | |
|---|---|
| Borlotti beans | 1500g |
| Potatoes | 2200g |
| Peas | 300g |
| Zucchini | 350g |
| Cubed tomatoes | 500g |
| Leeks . | 250g |

The above described dressing, with the addition of the precooked and frozen vegetables, was mixed uniformly in a 4:1 weight ratio with precooked pasta of a suitable short form, e.g. ditalini rigati (small macaroni), obtaining a mixture that, brought to a temperature of 0°-4°C, was pumped with a lobe pump into nozzles, to obtain drop-shaped portions of about 30-40mm diameter, 6-8 mm thickness and 10g weight.

The 'drops' were immediately frozen to -20°C and packaged in appropriate foodstuff containers.

## Claims

1. A method for the production of a frozen ready-to-eat dish based on pasta or cereal in grains, comprising the steps of:
a) preparing a fluid dressing and cooking optional food particle ingredients;
b) cooling said fluid dressing to a temperature varying between +4°C and -8°C;
c) uniformly mixing said fluid dressing and, optionally, said particle ingredients with precooked, and possibly frozen, pasta or cereal grains;
d) feeding the thus obtained and cooled mixture into a measuring equipment that provides for the formation of sphere-like portions of predetermined weight or volume;
e) subjecting said portions to ultra-fast freezing;
f) packaging a pre-determined number of said frozen portions into appropriate containers or bags.

2. A method according to claim 1, wherein said fluid dressing consists of a sauce or of a dressed vegetable soup or cream.

3. A method according to claim 1, wherein said particle ingredients are chosen from a group comprising vegetables, shellfish, crustaceans, fish, meat and mushrooms.

4. A method according to any one of the preceding claims wherein said precooked pasta and cereal grains are frozen.

5. A method according to any one of the preceding claims wherein said cereals are chosen from the group comprising rice, wheat, barley and spelt ("farro").

6. A method according to claim 1, wherein, in step b) said fluid dressing is cooled to a temperature varying between -1°C and -4°C.

7. A method according to claim 1, in which the mixture obtained from step c) is cooled to a temperature varying between +4°C and -8°C.

## Patentansprüche

1. Verfahren zur Herstellung eines gefrorenen, verzehrfertigen Gerichts auf der Basis von Nudeln oder körnigem Getreide, die Schritte umfassend:
a) Zubereiten eines Flüssigdressings und Kochen von optionalen Nahrungsmittelpartikelzutaten;
b) Abkühlen des Flüssigdressings auf eine Temperatur, die zwischen +4°C und -8°C schwankt;
c) gleichmäßiges Vermischen des Flüssigdressings und optional der Partikelzutaten mit vorgekochten, und möglicherweise gefrorenen, Nudeln oder Getreidekörnern;
d) Einleiten des so erhaltenen und abgekühlten Gemischs in eine Dosierungsanlage, die für die Bildung von kugelartigen Portionen von vorbestimmtem Gewicht oder Volumen sorgt;
e) Unterziehen der Portionen einem ultraschnellen Gefriervorgang;
f) Verpacken einer vorbestimmten Anzahl der gefrorenen Portionen in zweckentsprechende Behälter oder Beutel.

2. Verfahren nach Anspruch 1, wobei das Flüssigdressing aus einer Sauce oder aus einer abgeschmeckten Gemüsesuppe oder Gemüsecreme besteht.

3. Verfahren nach Anspruch 1, wobei die Partikelzutaten aus einer Gruppe ausgewählt sind, die Gemüse, Schalentiere, Krebstiere, Fisch, Fleisch und Pilze umfasst.

4. Verfahren nach einem der vorhergehenden Ansprüche, wobei die vorgekochten Nudeln und Getreidekörner gefroren sind.

5. Verfahren nach einem der vorhergehenden Ansprüche, wobei das Getreide aus der Gruppe ausgewählt ist, die Reis, Weizen, Gerste und Dinkel ("farro") umfasst.

6. Verfahren nach Anspruch 1, wobei in Schritt b) das Flüssigdressing auf eine Temperatur abgekühlt wird, die zwischen -1°C und -4°C schwankt.

7. Verfahren nach Anspruch 1, bei dem das aus Schritt c) erhaltene Gemisch auf eine Temperatur abgekühlt wird, die zwischen +4°C und -8°C schwankt.

## Revendications

1. Procédé de fabrication d'un plat surgelé prêt à consommer à base de pâtes ou de céréales en grains, comprenant les étapes consistant à :
a) préparer un assaisonnement liquide et cuisiner des ingrédients de particules alimentaires optionnels
b) refroidir ledit assaisonnement liquide à une température variant entre + 4°C et -8°C ;
c) mélanger uniformément ledit assaisonnement liquide et, éventuellement, lesdits ingrédients de particules avec des pâtes ou des grains de céréales précuits, et éventuellement congelés ;
d) introduire le mélange ainsi obtenu et refroidi dans un équipement de mesure qui prévoit la formation de portions en forme de sphère de poids ou de volume prédéterminé ;
e) soumettre lesdites portions à une congélation ultrarapide ;
f) emballer un nombre prédéterminé desdites portions congelées dans des récipients ou emballages appropriés.

2. Procédé selon la revendication 1, dans lequel ledit assaisonnement liquide consiste en une sauce ou une soupe ou crème végétale assaisonnée.

3. Procédé selon la revendication 1, dans lequel lesdits ingrédients de particules sont choisis parmi un groupe comprenant des légumes, des coquillages, des crustacés, du poisson, de la viande et des champignons.

4. Procédé selon l'une quelconque des revendications précédentes, dans lequel lesdites pâtes et lesdits grains de céréales précuits sont congelés.

5. Procédé selon l'une quelconque des revendications précédentes, dans lequel lesdites céréales sont choisies parmi le groupe comprenant du riz, du blé, de l'orge et de l'épeautre ("farro").

6. Procédé selon la revendication 1, dans lequel, dans l'étape b) ledit assaisonnement liquide est refroidi à une température variant entre -1°C et - 4°C.

7. Procédé selon la revendication 1, dans lequel le mélange obtenu à partir de l'étape c) est refroidi à une température variant entre + 4°C et -8° C.
